# EUROPÄISCHE PATENTSCHRIFT

(11) **EP 0 285 117 B1**
(45) Veröffentlichungstag und Bekanntmachung des Hinweises auf die Patenterteilung: **21.04.1993**
(21) Anmeldenummer: 88105136.1
(22) Anmeldetag: 30.03.1988
(51) Int. Cl.: G05D 23/19, F24F 11/00

(54) **Vorrichtung zur Steuerung oder Regelung von Heizungs-, Lüftungs- oder Klimaanlagen**
Apparatus for controlling or regulating heating, ventilation or air conditioning plants
Dispositif de commande ou de régulation d'installation de chauffage, ventilation ou climatisation

(30) Priorität: 03.04.1987 DE 3711324
(43) Veröffentlichungstag der Anmeldung: 05.10.1988
(73) Patentinhaber: HONEYWELL AG, 63067 Offenbach (DE)
(72) Erfinder: Adams, Horst, Dipl.-Phys. Dr., D-5300 Bonn 2 (DE); Schwartz, Peter, Dipl.-Ing. Dr., D-6454 Bruchköbel (DE); Lölkes, Peter, Dipl.-Ing., D-6457 Maintal 1 (DE)
(74) Vertreter: Herzbach, Dieter, Dipl.-Ing.

(56) Entgegenhaltungen:
- WO-A-85/05753
- DE-A- 3 423 731
- GB-A- 2 105 033
- ELECTRONICS. vol. 45, no. 24, 20 November 1972, NEW YORK US Seiten 111 - 113; W.E. OSBORNE: "Long-range infrared intruder alarm resists fault triggering"

## Beschreibung

Die vorliegende Erfindung bezieht sich auf eine Vorrichtung nach dem Gattungsbegriff des Patentanspruches 1.

Aus der DE-A-34 23 731 ist es bekannt, für die Regelung einer Raumheizung neben verschiedenen Parametern, wie Lufttemperatur, Luftfeuchte usw. auch die Strahlungstemperatur eines Raumes heranzuziehen. Dies hat den Vorteil, daß die Regelung empfindlicher wird, da z.B. die Erwärmung einer Wand durch Sonneneinstrahlung unmittelbar und nicht erst über die Erwärmung der Lufttemperatur wahrgenommen wird. Es ist auch bekannt, die Regelung einer Raumheizung von der Raumbelegung abhängig zu machen, wobei dies durch feste Zeitprogramme geschieht.

Die GB-A-21 05 033 zeigt die Ausgestaltung eines Infrarot-Detektors. Dieser benutzt eine bewegliche Blende, die über einen Treiber von einem Oszillator angesteuert wird. Das Empfangssignal wird einem Synchrongleichrichter zugeführt, der ebenfalls von dem Oszillator angesteuert wird. Als Meßsignal wird die Differenz zwischen einem Lufttemperaturfühler und dem durch den Infrarot-Detektor vorgegebenen Strahlungsfühler ausgegeben. Um zwischen einem Feuer und der durch eine Person hervorgerufenen Strahlung zu unterscheiden, wird der Einsatz von Filtern vorgeschlagen.

Schließlich ist aus dem Artikel "Long-range infrared intruder alarm resists fault triggering" von W. E. Osborne; Electronics, Heft 45, No. 24, Nov. 20, 1972 eine Einbruchsalarmanlage bekannt, die auf bewegliche Wärmequellen anspricht. Diese arbeitet mit einer feststehenden Strichplatte, durch die die Strahlung einer beweglichen Quelle auf einem Bolometer abgebildet wird, dessen Sensorstrom mit einer Trägerfrequenz moduliert wird. Die Unsymmetrie der Trägerfrequenz wird als Meßsignal ausgewertet.

Aufgabe der vorliegenden Erfindung ist es, einen Raum bezüglich Heizung, Lüftung oder Kühlung nur dann mit maximalem Energieaufwand zu steuern oder zu regeln, wenn dieser durch eine oder mehrere Personen belegt ist. Die Lösung dieser Aufgabe gelingt gemäß der im Patentanspruch 1 gekennzeichneten Vorrichtung. Eine weitere vorteilhafte Ausgestaltung der erfindungsgemäßen Vorrichtung ist dem Unteranspruch entnehmbar.

Die erfindungsgemäße Vorrichtung benutzt mit Vorteil das Signal eines Detektors, der ohnehin für die Messung der Strahlungstemper bereits vorhanden ist. Durch Frequenzfilterung des gemessenen Signales läßt sich auf einfache Weise ein Hinweis auf das Vorhandensein einer Person gewinnen.

Anhand der Figuren der beiliegenden Zeichnung sei im folgenden ein Ausführungsbeispiel der Erfindung näher beschreiben. Es zeigen:
- Fig. 1: eine perspektivische Ansicht eines Infrarot-Strahlungsdetektors mit zugehöriger Modulationseinrichtung; und
- Fig. 2: ein Blockschaltbild einer Auswerteschaltung für das Detektorsignal.

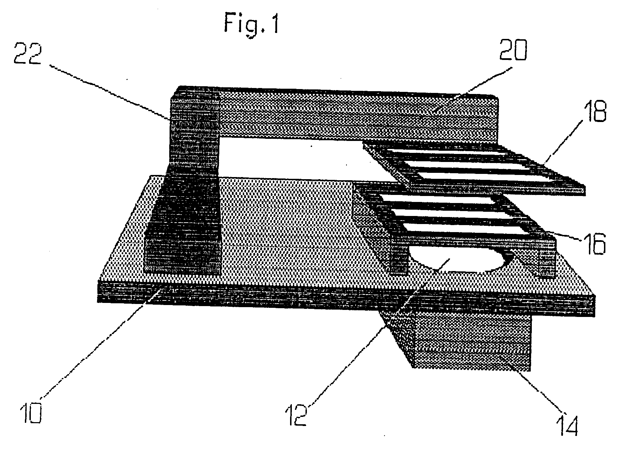

Gemäß Fig. 1 ist eine Trägerplatte 10 mit einer Strahlungseintrittsöffnung 12 versehen, hinter der ein Infrarot-(IR)-Detektor 14 angeordnet ist. Vor der Strahlungseintrittsöffnung 12 ist eine erste Schlitzscheibe 16 angeordnet, die fest mit der Trägerplatte 10 verbunden ist. Über dieser ortsfesten Schlitzscheibe 16 befindet sich in geringem Abstand und parallel dazu eine zweite Schlitzscheibe 18 gleicher Ausgestaltung, die an einem piezoelektrischen Stellglied 20 (z.B. Bimorphstreifen) befestigt ist. Das piezoelektrische Stellglied 20 ist an einem Träger 22 angelenkt, der mit der Trägerplatte 10 verbunden ist. Das piezoelektrische Stellglied 20 wird in bekannter Weise durch elektrische Signale angesteuert, um eine Biegeschwingung desselben hervorzurufen. Wenn die Stege der beweglichen Schlitzscheibe 18 genau über den Stegen der ortsfesten Schlitzscheibe 16 liegen, so kann IR-Strahlung durch die Strahlungseintrittsöffnung 12 zu dem IR-Detektor 14 gelangen. Wenn jedoch die bewegliche Schlitzscheibe 18 durch das piezoelektrische Stellglied 20 so verschoben wird, daß sich jeweils Steg und Schlitz der beiden Schlitzscheiben gegenüberliegen, so gelangt keine IR-Strahlung zu dem IR-Detektor 14. Das von dem IR-Detektor 14 gelieferte elektrische Signal wird daher im Rhythmus der Bewegung der Schlitzscheibe 18 zerhackt.

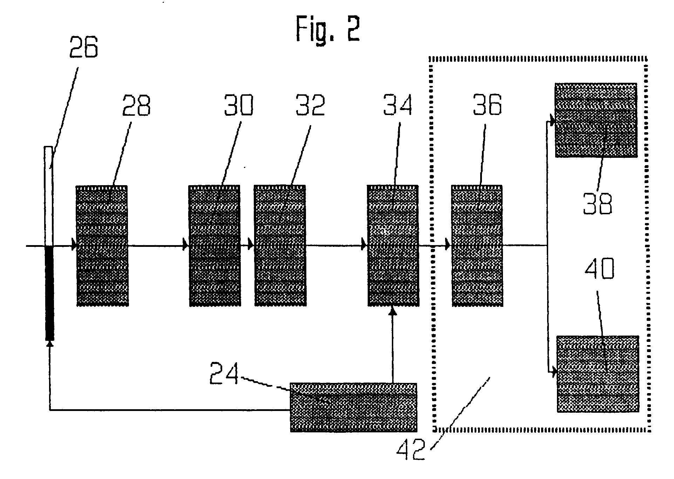

Gemäß Figur 2 wird die durch einen Pfeil angedeutete Infrarot-Strahlung durch einen Modulator 26 zerhackt, der von einer Steuerung 24 entsprechend angesteuert wird. Ein hinter dem Modulator 26 angeordneter IR-Detektor 28 erzeugt daher ein entsprechend moduliertes Ausgangssignal, das einem Vorverstärker 30 und anschließend einem Bandfilter 32 zugeführt wird. Das entsprechend verstärkte und gefilterte Ausgangssignal wird einem Synchrongleichrichter 34 zugeführt, der durch das Modulations-Steuersignal der Steuerung 24 synchronisiert wird. Das demodulierte Signal hinter dem Synchrongleichrichter 34 weist in Abhängigkeit von den in dem überwachten Raum befindlichen Wärmequellen u.U. eine veränderliche Amplitude auf. Dieses Signal wird nach Verstärkung in einem Verstärker 36 einmal einem Tiefpaßfilter 38 und zum anderen einem Hochpaßfilter 40 zugeführt. Die beiden Filter 38 und 40 sind zueinander parallelgeschaltet und sie geben eine Frequenzweiche 42 vor. Die obere Grenzfrequenz des Tiefpasses 38 liegt ebenso wie die untere Grenzfrequenz des Hochpaßfilters 40 bei 0,5 Hz. Der Wert von 0,5 Hz zeigt sich als geeignet, die Präsenz einer Person in einem Raum anzuzeigen. Alle Änderungen der Infrarotstrahlung, die nicht auf im Raum vorhandene Personen zurückgehen, erfolgen in der Regel mit einer Frequenz, die niedriger als 0,5 Hz liegt. Hingegen weisen die Schwebungen der Meßamplitude, die aufgrund der Bewegung von Personen im Raum hervorgerufen werden, eine Frequenz auf, die höher als 0,5 Hz liegt. Somit ergibt sich am Ausgang des Tiefpaßfilters 38 ein Strahlungssignal I_{S}, das auf immobile Wärmequellen zurückgeht, während sich am Ausgang des Hochpaßfilters 40 ein Signal I_{P} ergibt, das durch mobile Strahlungsquellen, d.h. durch Personen hervorgerufen wird und somit die Personenpräsenz anzeigt. Das Signal I_{P} am Ausgang des Hochpasses 40 kann sodann mit Vorteil für eine Optimierung der Raumtemperaturregelung herangezogen werden.

## Patentansprüche

1. Vorrichtung zur Steuerung oder Regelung von Heizungs-, Lüftungs- oder Klimaanlagen, bei der neben der Lufttemperatur zusätzlich auch die Strahlungstemperatur eines Raumes durch einen Detektor gemessen wird, in dem eine vor dem Detektor angeordnete bewegliche Blende ein moduliertes Strahlungstemperatursignal erzeugt und ein aus der Lufttemperatur und der Strahlungstemperatur gebildetes kombiniertes Signal für die Steuerung oder Regelung der Anlage verwendet wird, **gekennzeichnet durch** folgende Merkmale:
a) die bewegliche Blende (16, 18) wird durch eine Modulationssteuerung (24) angesteuert;
b) ein ebenfalls von der Modulationssteuerung (24) angesteurter Synchrongleichrichter (34) erhält das von dem Detektor (28) gemessene Signal zugeführt; und
c) das demodulierte Signal des Synchrongleichrichters (34) wird einer Frequenzweiche (42) zugeführt, die aus der Parallelschaltung eines Tiefpasses (38) und eines Hochpasses (40) besteht, wobei das Strahlungstemperatursignal (I_{S}) hinter dem Tiefpaß und ein Personen-Präsenzsignal (I_{P}) hinter dem Hochpaß abgenommen wird, um nur bei Vorliegen des letzteren Signales die Steuer- und Regelvorrichtung mit maximalem Energieaufwand zu betreiben.

2. Vorrichtung nach Anspruch 1, **dadurch gekennzeichnet,** daß die Grenzfrequenz von Tiefpaß (38) und Hochpaß (40) mit 0,5 Hz gewählt ist.

## Claims

1. Apparatus for controlling or regulating heating, ventilation or air conditioning plants, at which besides of the air temperature also the radiation temperature of a room is measured by means of a detector in that a movable shutter in front of the detector generates a modulated radiation temperature signal and a signal formed by a combination of the air temperature and the radiation temperature is used for the control or regulation of the plant, **characterized by** the following features:
a) the movable shutter (16,18) is controlled by a modulation control (24);
b) a synchronous rectifier (34) also controlled by the modulation control (24) is fed by the signal measured by the detector (28); and
c) the demodulated signal of the synchronous rectifier (34) is fed to a frequency separator (42) consisting of a low-pass filter (38) and a high-pass filter (40), whereat the radiation temperature signal (I_{S}) is taken from the low-pass filter and a signal (I_{P}) indicating the presence of a person is taken from the high-pass filter in order to operate the control and regulating apparatus with maximum energy expenditure only in the event where the last named signal is present.

2. Apparatus according to claim 1, **characterized in that** the cut-off frequency of the low-pass filter (38) and the high-pass filter (40) is chosen at 0,5 Hz.

## Revendications

1. Dispositif de commande ou de régulation d'installations de chauffage, de ventilation ou de climatisation, dans lequel non seulement la température de l'air, mais en outre aussi la température de rayonnement d'un espace sont mesurées par un détecteur, par le fait qu'un diaphragme mobile agencé devant le détecteur engendre un signal de température de rayonnement modulé, et un signal combiné formé à partir de la température de l'air et de la température de rayonnement est utilisé pour la commande ou la régulation de l'installation, caractérisé par les caractéristiques suivantes :
a) le diaphragme mobile ( 16,18) est commandé par une commande de modulation (24);
b) un redresseur synchrone (34), également commandé par la commande de modulation (24), reçoit le signal mesuré par le détecteur (28) ; et
c) le signal démodulé du redresseur synchrone (34) est amené à un diviseur de fréquence (42), qui est constitué par la mise en circuit en parallèle d'un filtre passe-bas (38) et d'un filtre passe-haut (40), le signal (I_{S}) de la température de rayonnement étant prélevé en aval du filtre passe-bas et un signal (I_{P}) de présence d'une personne étant prélevé en aval du filtre passe-haut, pour faire fonctionner le dispositif de commande et de régulation avec une dépense maximale d'énergie uniquement lors de la présence du signal indiqué en dernier.

2. Dispositif selon la revendication 1, caractérisé en ce que la fréquence limite du filtre passe-bas (38) et du filtre passe-haut (40) est choisie égale à 0,5 Hz.
